# EUROPÄISCHE PATENTANMELDUNG

(11) **EP 2 251 218 A1**
(43) Veröffentlichungstag der Anmeldung: **17.11.2010**
(21) Anmeldenummer: 10002410.8
(22) Anmeldetag: 09.03.2010
(51) Int. Cl.: B60G 13/00, B60G 15/06, B60G 15/12, F16F 9/54

(54) **Gelenkiges Stützlager**

(30) Priorität: 12.05.2009 DE 102009020985
(71) Anmelder: Carl Freudenberg KG, 69469 Weinheim (DE)
(72) Erfinder: Lindemann, Peter, 22395 Hamburg (DE); Kuschel, Christian, 21244 Buchholz (DE)

(57) **Zusammenfassung**

Gelenkiges Stützlager insbesondere bei Federbeinen für Kraftfahrzeuge, mit einer elastisch eingefassten Tragplatte für die Anbindung der Kolbenstange des Schwingungsdämpfers an einem Stützteil am Kraftfahrzeug, wobei die Tragplatte (4) von mindestens zwei einzelnen Elastomerelementen (5) randseitig eingefasst ist.

## Beschreibung

### Technisches Gebiet

Die vorliegende Erfindung betrifft ein gelenkiges Stützlager, insbesondere bei Federbeinen für Kraftfahrzeuge mit einer elastisch eingefassten Tragplatte für die Anbindung der Kolbenstange des Schwingungsdämpfers an einem Stützteil des Kraftfahrzeugs,

Die hier zum Einsatz kommenden Stützlager müssen Schwenkbewegungen der Kolbenstange zulassen und außerdem die axial auf die Kolbenstange einwirkenden Kräfte abfangen. Zu diesem Zweck wird die Tragplatte mit einem Elastomerelement verbunden, welches in axialer, radialer und kardanischer Richtung mit einer vorher festgelegten Federsteifigkeit ausgelegt wird.

### Stand der Technik

Aus der DE 197 55 549 A1 ist die Ausbildung eines gelenkigen Stützlagers bekannt, bei dem die Kolbenstange an einer Tragplatte befestigt wird, wobei die Tragplatte beidseitig von einem Elastomerelement eingefasst ist. Dabei werden zwei Möglichkeiten angegeben. Zum einen wird die Tragplatte in den Elastomerkörper einvulkanisiert, während die andere Möglichkeit vorsieht, den bei Federbeinen üblichen Druckanschlag mit der Tragplatte zu verbinden, die ihrerseits am Elastomerelement anliegt. Das Elastomerelement seinerseits besteht aus zwei übereinander liegenden Hälften, die auf den Deckseiten einer Abstützscheibe zur Anlage kommen. Die Abstützscheibe selbst dient zur Verbindung des Federbeins mit einem Kraftfahrzeugteil. Die Herstellung eines solchen Stützlagers hat sowohl fertigungs- als auch montagemäßig den Nachteil, dass es mit hohem Aufwand verbunden ist.

### Darstellung der Erfindung

Der Erfindung liegt die Aufgabe zugrunde, ein Stützlager zu schaffen, welches einfach in seinem konstruktiven Aufbau ist und dessen Herstellung einschließlich Montage mit wenigen Verfahrensschritten durchführbar ist.

Die Lösung der gestellten Aufgabe wird mit den Merkmalen des Anspruchs 1 durchgeführt.

Das erfindungsgemäße Stützlager hält die Tragplatte wobei diese über den Gewindezapfen an der Kolbenstange mit derselben verbunden wird. Die Anbringung der Tragplatte am Anbindungsteil des Federbeins wird über Elastomerelemente vorgenommen, welche randseitig die Tragplatte einfassen und die ihrerseits am Anbindungsteil des Federbeins befestigt sind.

Die Tragplatte selbst ist aus Metall und hat eine zentrale, den Gewindezapfen der Kolbenstange umfassende Öffnung, so dass sie auf den Gewindezapfen aufgesetzt werden kann. Von Vorteil ist, wenn zwischen die Tragplatte und dem Gewindeansatz an der Kolbenstange ein Adapterring eingesetzt wird, über den die Standfestigkeit der Tragplatte verbessert wird, indem er mit einem größeren Außenradius als die Kolbenstange selbst ausgestattet, eine vergrößerte Auflagefläche für die Tragplatte bildet. Außerdem ist es günstig, wenn der Adapterring einen axial vorstehenden Innenkragen hat, auf den die Tragplatte ortsfest aufgesetzt und verstemmt werden kann.

Bevorzugt wird die Tragplatte mit einer Ummantelung aus Kunststoff versehen. Dabei ist es günstig, wenn die Ummantelung an der Tragplatte einen Freiraum für den Adapterring und eine Befestigungsmutter frei lässt. Darüber hinaus ist es von Vorteil, wenn die Tragplatte auf ihrem Umfang mit Öffnungen versehen wird, die einer verbesserten Halterung der Kunststoffummantelung an der Tragplatte ergeben.

Die bevorzugte Ausführungsform der Erfindung sieht vor, dass zwei symmetrisch ausgebildete Elastomerelemente in Form von Halbschalen verwendet werden. Die Elastomerelemente sind in ihrem Inneren mit einer ringförmigen Nut versehen, die an die Form der Tragplatte angepasst ist, so dass die Tragplatte von den Elastomerelementen randseitig eingefasst wird. Die axialen Stirnflächen am Montagestoß der Halbschalen kommen bei der Montage aneinander zum Anliegen und ergeben dadurch einen dichten Abschluss an den Stoßstellen. Um eine gute Abfederung des Stützlagers in axialer Richtung zu erreichen, können die Elastomerelemente auf ihrer Ober- und/oder Unterseite mit hervorstehenden Höckern versehen sein, welche den Federvorgang unterstützen.

Zur besonders einfachen Ausbildung des Stützlagers trägt auch bei, dass das Stützteil für die Anbindung des Stützlagers am Kraftfahrzeug mit einem Gehäuse für das Stützlager versehen wird. Dieses Gehäuse hat eine Bodenöffnung, durch welche die Kolbenstange des Schwingungsdämpfers hindurchgeführt wird. Auf der gegenüber liegenden Seite ist das Gehäuse mit einem Deckel dicht verschlossen. Zwischen dem Boden des Gehäuses und seinem Deckel werden die Elastomerelemente im Gehäuse festgeklemmt. Die Ausbildung des Federbeins selbst kann an sich üblicher Bauweise sein, indem für den Federvorgang z.B. eine Gasfeder eingesetzt wird, welche mit einem Federbalg und einem entsprechenden Kolben für das Abrollen des Federbalgs versehen ist. Zur Begrenzung des Federwegs des Abrollkolbens ist das Gehäuse seiner Unterseite mit einem Anschlagpuffer ausgestattet.

### Kurzbeschreibung der Zeichnung

Anhand eines in der Zeichnung dargestellten Ausführungsbeispiels wird die Erfindung nachstehend näher erläutert.
Es zeigt
- Fig. 1: einen Längsschnitt durch das in ein Stützteil eines Kraftfahrzeugs eingebaut Stützlager und
- Fig. 2: eine perspektivische Ansicht eines als Halbschale ausgebildeten Elastomerelements mit eingefügter Tragplatte und Adapterring im Schnitt gesehen.

### Ausführung der Erfindung

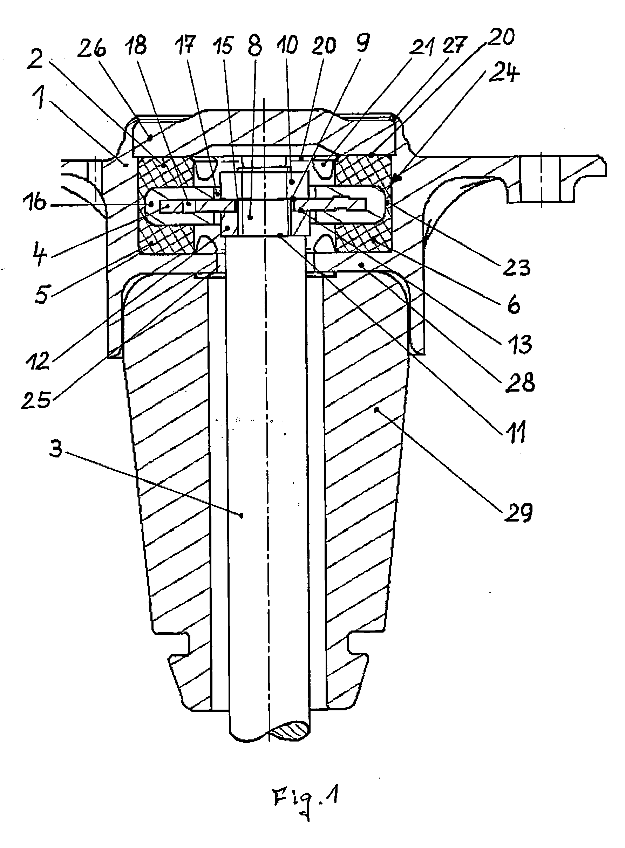

In der Figur 1 ist im Längsschnitt das Gehäuse 1 mit dem darin befindlichen Stützlager 2 für die Anbindung der Kolbenstange 3 dargestellt. Alle Teile gehören zu einem bei Kraftfahrzeugen eingesetzten Federbein. Die Kolbenstange 3 ist Teil des Schwingungsdämpfers, der im vorliegenden Fall mit einer Gasfeder zusammen wirkt, die und mit einem Rollbalg an einem Rollkolben abrollt. Diese Teile des Federbeins sind nicht näher dargestellt, da sie üblicher Bauweise sein können. Das gelenkig ausgebildete Stützlager 2 hat die Tragplatte 4, die von zwei Elastomerelementen 5 eingefasst ist Die Elastomerelemente 5 sind als symmetrische Halbschalen ausgebildet. Der in der Figur gezeigte Längsschnitt durch das Stützlager 2 ist an den axialen Stoßstellen 6 der Halbschalen geführt, so dass in der Figur die Stoßstellen 6 der rückwärtigen Halbschale 7 sichtbar sind. Die Tragplatte 4 ist aus einem Stahlblech hergestellt, um die hohen von der Kolbenstange 3 ausgehenden Kräfte aufnehmen zu können. Der Gewindezapfen 8 der Kolbenstange 3 wird durch die in der Tragplatte 4 vorhandene Öffnung 9 geführt und die Tragplatte 4 über die Mutter 10 verschraubt. Dabei ist zwischen dem Gewindeansatz 11 an der Kolbenstange 3 und der Tragplatte 4 ein Adapterring 12 eingefügt, welcher für die Tragplatte 4 eine gegenüber dem Gewindeansatz 11 vergrößerte Auflagefläche 13 ergibt. Außerdem hat der Adapterring 12 den Innenkragen 15, der passend in die Öffnung 9 der Tragplatte 4 eingefügt und verstemmt ist. Die in der Form einer Ringscheibenform vorliegende Tragplatte 4 ist mit der aus Kunststoff bestehenden Ummantelung 16 versehen. Diese Ummantelung 16 umfasst die Tragplatte 4 von den Außenrändern her und hat im Innenbereich den Freiraum 17 für den Adapterring 12 und die Befestigungsmutter 10. Die beiden letztgenannten Teile können dadurch direkt an der Tragplatte 4 angreifen. Für die Befestigung der Kunststoffummantelung 16 an der Tragplatte 4 ist es günstig, wenn die Tragplatte 4 mit den Öffnungen 18 versehen ist, die von dem Kunststoff durchdrungen werden. Die Öffnungen 18 sind in vorgegebenen Abständen an der Tragplatte 4 angebracht. Die Elastomerelemente 5 können auf ihrer Ober- und Unterseite mit den vorstehenden Höckern 20 versehen sein. Die Höcker 20 sind durch radial ausgerichtete Nuten 21 voneinander beabstandet. Die Höcker 20 sind mitbestimmend für das Federungsverhalten des Stützlagers 2. Die Elastomerelemente 5 haben die inneren Ringnuten 23, welche die Kunststoffummantelung 16 mit der Tragplatte 4 formschlüssig einfassen. Das Gehäuse 1 ist mit der Aufnahmekammer 24 versehen, in die das Stützlager 2 passend eingelegt ist. Die Aufnahmekammer 24 hat die Bodenöffnung 25 für die Durchführung der Kolbenstange 3. Diese Öffnung 25 lässt die kardanische Bewegung der Kolbenstange 3 zu. Außerdem ist die Aufnahmekammer 24 mit dem Deckel 26 dicht verschlossen. Der Deckel 26 wird durch den Bördelrand 27 des Gehäuses 1 in seiner Lage gehalten. Am Unterboden 28 der Aufnahmekammer 24 ist der Anschlagpuffer 29 für den Rollkolben der Gasfeder angebracht.

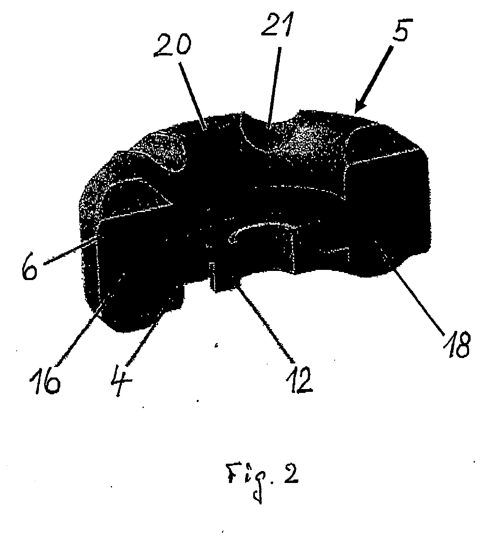

In der Figur 2 ist in perspektivischer Ansicht ein Elastomerelement 5 mit darin befindlicher Tragplatte 4 und Adapterring 12 gezeigt. Dabei ist das Elastomerelement 5 in der Form einer Halbschale gezeigt und die darin eingefassten Teile aus Tragplatte 4 und Adapterring 12 sind im Bereich des Montagestoßes geschnitten. Die Flächen 6 des Montagestoßes kommen nach der Montage des Stützlagers 2 in der Aufnahmekammer 24 mit den entsprechenden Flächen der gegenüber liegenden Halbschale dichtend zur Anlage. In dieser Darstellung sind die Höcker 20 des Elastomerelements 5 gut sichtbar.

Im Beispiel ist eine Ausführungsform mit zwei Elastomerelementen 5 behandelt. Ohne den Gedanken der Erfindung zu verlassen ist es auch möglich, drei oder mehr Elastomerelemente vorzusehen, die die Tragplatte 4 sicher in der Aufnahmekammer 24 halten.

## Patentansprüche

1. Gelenkiges Stützlager insbesondere bei Federbeinen für Kraftfahrzeuge, mit einer elastisch eingefassten Tragplatte für die Anbindung der Kolbenstange des Schwingungsdämpfers an einem Stützteil am Kraftfahrzeug, **dadurch gekennzeichnet, dass** die Tragplatte (4) von mindestens zwei einzelnen Elastomerelementen (5) randseitig eingefasst ist.

2. Gelenkiges Stützlager nach Anspruch 1 **dadurch gekennzeichnet, dass** die Tragplatte (4) aus Metall ist.

3. Gelenkiges Stützlager nach einem der Ansprüche 1 oder 2, **dadurch gekennzeichnet, dass** die Tragplatte (4) eine zentrale, den Gewindezapfen (8) der Kolbenstange (3) umfassende Öffnung (9) hat.

4. Gelenkiges Stützlager nach einem der Ansprüche 1 bis 3, **dadurch gekennzeichnet, dass** die Tragplatte (4) über einen Adapterring (12) am Gewindeansatz (11) der Kolbenstange (3) anliegt.

5. Gelenkiges Stützlager nach einem der Ansprüche 1 bis 4, **dadurch gekennzeichnet, dass** der Adapterring (12) einen axial vorstehenden Innenkragen (15) hat, auf den die Tragplatte (4) ortsfest aufgesetzt ist.

6. Gelenkiges Stützlager nach einem der Ansprüche 1 bis 5, **dadurch gekennzeichnet, dass** die Tragplatte (4) mit einer Ummantelung (16) aus Kunststoff versehen ist.

7. Gelenkiges Stützlager nach einem der Ansprüche 1 bis 6, **dadurch gekennzeichnet, dass** die Ummantelung (16) an der Tragplatte (4) einen Freiraum (17) für den Adapterring (12) und die Befestigungsmutter (10) freilässt.

8. Gelenkiges Stützlager nach einem der Ansprüche 1 bis 7, **dadurch gekennzeichnet, dass** die Tragplatte (4) auf ihrem Umfang Öffnungen (18) hat.

9. Gelenkiges Stützlager nach einem der Ansprüche 1 bis 8, **dadurch gekennzeichnet, dass** zwei symmetrisch ausgebildete Elastomerelemente (5) in Form von Halbschalen (7) vorhanden sind.

10. Gelenkiges Stützlager nach einem der Ansprüche 1 bis 9, **dadurch gekennzeichnet, dass** die Elastomerelemente (5) auf ihrer Ober- und/oder Unterseite vorstehende Höcker (20) haben.

11. Gelenkiges Stützlager nach einem der Ansprüche 1 bis 10, **dadurch gekennzeichnet, dass** das Stützteil (1) eine Aufnahmekammer (24) für das Stützlager (2) hat.

12. Gelenkiges Stützlager nach einem der Ansprüche 1 bis 11, **dadurch gekennzeichnet, dass** die Aufnahmekammer (24) eine Bodenöffnung (25) zur Durchführung der Kolbenstange (3) hat.

13. Gelenkiges Stützlager nach einem der Ansprüche 1 bis 12, **dadurch gekennzeichnet, dass** die Aufnahmekammer (24) mit einem Deckel (26) dicht verschlossen ist.

14. Gelenkiges Stützlager nach einem der Ansprüche 1 bis 13, **dadurch gekennzeichnet, dass** das Federbein eine Gasfeder hat.

15. Gelenkiges Stützlager nach einem der Ansprüche 1 bis 14, **dadurch gekennzeichnet, dass** die Gasfeder einen Rollbalg aufwreist.

16. Gelenkiges Stützlager nach einem der Ansprüche 1 bis 15, **dadurch gekennzeichnet, dass** am Unterboden (28) der Aufnahmekammer (24) ein Anschlagpuffer (29) angebracht ist.
